# EUROPÄISCHE PATENTSCHRIFT

(11) **EP 1 675 205 B1**
(45) Veröffentlichungstag und Bekanntmachung des Hinweises auf die Patenterteilung: **15.02.2017**
(21) Anmeldenummer: 04029304.5
(22) Anmeldetag: 10.12.2004
(51) Int. Cl.: H01M 10/30, H01M 10/28

(54) **Alkalischer Akkumulator**
Alkaline battery
Accumulateur alcalin

(43) Veröffentlichungstag der Anmeldung: 28.06.2006
(73) Patentinhaber: Hoppecke Batterie Systeme GmbH, 59929 Brilon (DE)
(72) Erfinder: Ohms, Detlef, Dr., 37085 Göttingen (DE); Schädlich, Gunter, Dr., 08459 Neukirchen (DE)
(74) Vertreter: Stenger Watzke Ring

(56) Entgegenhaltungen:
- EP-A- 0 935 305
- DE-A1- 3 739 735
- PATENT ABSTRACTS OF JAPAN Bd. 014, Nr. 120 (E-0899), 6. März 1990 (1990-03-06) & JP 01 315962 A (JAPAN STORAGE BATTERY CO LTD), 20. Dezember 1989 (1989-12-20)

## Beschreibung

Die vorliegende Erfindung betrifft eine Nickel-Cadmium-Batterie mit Taschenplatten-Negativen zur elektrochemischen Speicherung von Energie.

Batterien und Akkumulatoren sind ein elementarer Bestandteil des alltäglichen Lebens geworden, ohne sie funktionieren weder elektrische Anlasser in Kraftfahrzeugen noch Handys. Prinzipiell bestehen diese Energiespeicher aus einer Anode, einem Elektrolyten und einer Kathode. Die Metalle, aus denen die Elektroden üblicherweise gebildet sind, ionisieren bei Kontakt mit dem Elektrolyten. Je nach verwendeten Materialien ergibt sich an den beiden Elektroden ein unterschiedliches Potential und somit eine Potentialdifferenz, durch die dem Akkumulator bzw. der Batterie Energie entnommen werden kann.

Ein großer Teil alkalischer Batterien und Akkumulatoren beruht auf der Verwendung von Taschenplattenelektroden auf der positiven wie auch der negativen Zellenseite. Daneben sind auch Energiespeicher bekannt, bei denen beidseitig Sinterelektroden, Sinterelektroden einerseits und kunststoffgebundene Elektroden andererseits oder beidseitig Elektroden in Faserstrukturtechnik verwendet werden. Nickel-Cadmium-Zellen mit Taschenplattenzellen werden für eine Reihe von Anwendungen in der stationären und mobilen Energiespeicherung eingesetzt, weisen jedoch den Nachteil auf, daß sich die Belastbarkeit der Zellen durch chemische Nebenreaktionen an der positiven Elektrode verschlechtert. Dies führt zu einer schnelleren Alterung und damit zu einer geringeren Lebensdauer. Daneben erfordern diese Elektroden die Verwendung von Maßnahmen zur Verbesserung bzw.

Stabilisierung der elektrischen Leitfähigkeit, die sich ebenfalls ungünstig auf das Langzeitverhalten auswirken.

Der Erfindung liegt daher die **Aufgabe** zugrunde, die Eigenschaften von Nickel-Cadmium-Batterien mit Taschenplatten-Negativen so zu verändern, daß das ungünstige Langzeitverhalten vermieden wird und bessere Belastungsdaten erzielt werden.

Erfindungsgemäß wird die Aufgabe dadurch **gelöst,** daß anstelle der positiven Taschenplattenelektrode eine positive Elektrode in Faserstrukturtechnologie verwendet wird.

Taschenplattenelektroden sind derart aufgebaut, daß üblicherweise gelochte Platten bzw. Bleche aus Nickel oder vernickeltem Trägermaterial, wie zum Beispiel Stahlblech, taschenbildend angeordnet werden und in diese Taschen eine elektrochemisch aktive Masse eingebracht wird. Zur elektrischen und räumlichen Separation wird ein Separator bzw. Abstandshalter verwendet. Der Nachteil solcher Elektroden besteht darin, daß sie einen reduzierten Wirkungsgrad bezogen auf speicherbare Energie aufweisen und daß notwendigerweise Zusätze zur Verbesserung der Leitfähigkeit erforderlich werden. Diese Zusätze sind elektrochemisch instabil.

Elektroden in Faserstrukturtechnologie weisen ein poröses Gerüst aus Vliesstoff oder Nadelfilz auf, das mit einer dünnen Metallschicht versehen und mit einer elektrochemisch aktiven Masse befüllt wird. Durch das geringe Gewicht des Gerüstes wird die Effizienz bezogen auf speicherbare Energie pro Gewicht verbessert sowie eine Erhöhung der Belastbarkeit durch die Verbesserung der Kontaktierung des Aktivmaterials erreicht. Außerdem bewirkt die poröse Struktur eine größere Elektrodenoberfläche und damit eine höhere Belastbarkeit. Nachteilig sind jedoch die im Vergleich zu einer Taschenplattenelektrode signifikant höheren Produktionskosten.

Gemäß der vorliegenden Erfindung zeichnet sich eine alkalische Nickel-Cadmium-Zelle mit Taschenplatten-Negativen dadurch aus, daß die positiven Elektroden als Faserstrukturelektroden ausgebildet sind. Der besondere Vorteil liegt dabei in der Wirtschaftlichkeit der Herstellung einer solchen hybriden Zelle unter gleichzeitiger Vermeidung oben genannter Nachteile.

Weiterhin wird vorgeschlagen, daß die Kapazität der Elektroden so gewählt wird, daß beim Entladen der Zelle die positiven Faserstrukturelektroden den Entladeprozeß begrenzen. Dazu wird die Flächenkapazität der positiven Elektrode geeignet gewählt. Somit wird erreicht, daß eine gewisse Mindestkapazität der negativen Taschenplattenelektrode nicht unterschritten wird und dadurch das Langzeitverhalten des Energiespeichers signifikant verbessert wird.

Gemäß einem weiteren Vorschlag zeichnet sich die Zelle dadurch aus, daß die Anzahl der positiven Elektroden kleiner oder gleich der der negativen gewählt wird und diese abwechselnd angeordnet sind, so daß die außenliegenden Elektroden negative Taschenplattenelektroden sind. Werden die Elektroden sequentiell geschichtet angeordnet, so ist die Anzahl der positiven Elektroden kleiner der der negativen, so daß es sich bei den Außenliegenden um negative Elektroden handelt.

Gemäß einem weiteren Merkmal der vorliegenden Erfindung sind die außenliegenden negativen Elektroden weniger dicht mit Aktivmasse gefüllt als die innenliegenden negativen Elektroden. Bei der gebräuchlichen Reihenschaltung von Einzelzellen wird die Kapazität des gesamten Akkumulators bzw. der gesamten Batterie durch die Kapazität der kleinsten Einzelzelle begrenzt.

Es hat sich gezeigt, daß in idealer Weise die Faserstrukturelektroden Flächenkapazitäten von vorzugsweise 50 mAh/cm² bis 250 mAh/cm² (bezogen auf die Elektrodengeometrie) aufweisen. Die Vorteile einer variablen Flächenkapazität der positiven Elektrode bestehen darin, daß man sich an die engen Verfahren, die aus der Herstellung der negativen Taschenplatten resultieren, anpassen kann. Dies geschieht beispielsweise über eine Variation des zur Herstellung der Faserstrukturelektroden verwendeten Ausgangsmaterials und die Anpassung von Aktivmassenmengen und Material. Es erfolgt eine Dickenvariation. Dabei stellt der Kapazitätsbereich zwischen 50 mAh/cm² und 250 mAh/cm² einen geeigneten Kompromiß zwischen der gewünschten Gesamtkapazität des Akkumulators bzw. der Batterie und dem fertigungstechnischen Aufwand dar.

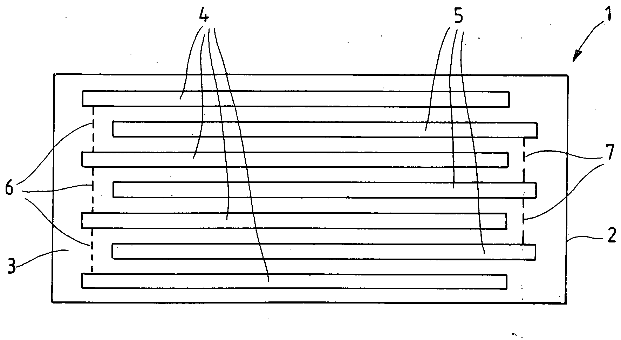

Die Erfindung ist nachfolgend anhand eines Ausführungsbeispiels noch näher erläutert. Dabei zeigt die einzige Fig. 1 den schematischen Aufbau eines erfindungsgemäßen alkalischen Akkumulators.

Wie der schematischen Darstellung nach Fig. 1 entnommen werden kann, weist der erfindungsgemäße Akkumulator 1 ein Gehäuse 2 auf. Dieses Gehäuse 2 dient der Aufnahme von negativen Elektroden 4 und positiven Elektroden 5, wobei sich zwischen den einzelnen Elektroden ein Elektrolyt 3 befindet, der einerseits der Erzeugung eines elektrochemischen Potentials und andererseits dem Ionentransport dient. Erfindungsgemäß sind die negativen Elektroden 4 als Taschenplattenelektroden und die positiven Elektroden 5 als Faserstrukturelektroden ausgebildet.

Wie Fig. 1 erkennen läßt, sind die negativen Elektroden 4 und die positiven Elektroden 5 einander überlappend abwechselnd angeordnet, wobei die beiden äußeren Elektroden als negative Elektroden 4 ausgebildet sind, so daß der Akkumulator 1 über insgesamt vier negative Elektroden 4 und drei positive Elektroden 5 verfügt. Andere Ausführungsformen sind selbstverständlich denkbar, da es erfindungsgemäß allein darauf ankommt, daß die positiven Elektroden 5 als Faserstrukturelektroden und die negativen Elektroden 4 als Taschenplattenelektroden ausgebildet sind.

Im Nichtüberlappungsbereich bilden die Elektroden 4 bzw. 5 sogenannte Fahnen aus, die der einfachen elektrischen Kontaktierung dienen. Schematisch ist dies in Fig. 1 durch Strichlinien dargestellt, wobei die elektrische Verbindung der negativen Elektroden 4 durch das Bezugszeichen 6 und die elektrische Verbindung der positiven Elektroden durch das Bezugszeichen 7 kenntlich gemacht ist.

Der erfindungsgemäße Akkumulator 1 zeichnet sich dadurch aus, daß er aufgrund der abwechselnden Anordnung von Taschenelektroden und Faserstrukturelektroden besser belastbar ist und weniger Alterungserscheinungen zeigt als Batterien bzw. Akkumulatoren, wie sie aus dem Stand der Technik bekannt sind. Darüber hinaus ist der erfindungsgemäße Akkumulator 1 wirtschaftlich produzier- und einsetzbar.

Es versteht sich von selbst, daß das anhand der schematischen Fig. 1 beschriebene Ausführungsbeispiel lediglich der Erläuterung dient. Alternative Ausgestaltungsformen, die mit unter die Erfindung fallen, sind denkbar. So zum Beispiel hinsichtlich der Größe und Anzahl der verwendeten Elektrolyten, der Anordnung derselben im Akkumulatorgehäuse sowie hinsichtlich einer elektrischen Kontaktierung der einzelnen Elektroden. Erfindungswesentlich ist allein, daß die negativen Elektroden durch Taschenplattenelektroden und die positiven Elektroden durch Faserstrukturelektroden gebildet sind.

### Bezugszeichenliste

- 1: Akkumulator
- 2: Gehäuse
- 3: Elektrolyt
- 4: negative Elektrode (Taschenplattenelektrode)
- 5: positive Elektrode (Faserstrukturelektrode)
- 6: elektrische Verbindung
- 7: elektrische Verbindung

## Patentansprüche

1. Alkalische Nickel-Cadmium-Zelle mit wenigstens einer negativen Elektrode (4) und wenigstens einer positiven Elektrode (5),
**dadurch gekennzeichnet, dass**
die negative Elektrode (4) als Taschenplattenelektrode ausgebildet ist und die positive Elektrode (5) als Faserstrukturelektrode ausgebildet ist.

2. Alkalische Nickel-Cadmium-Zelle nach Anspruch 1, **dadurch gekennzeichnet, dass** die Taschenplattenelektrode gelochte Platten aus Nickel oder vernickeltem Trägermaterial aufweist, welche Platten taschenbildend angeordnet sind, wobei die Taschenplattenelektrode mit einer elektrochemisch aktiven Masse gefüllt ist.

3. Alkalische Nickel-Cadmium-Zelle nach Anspruch 1 oder 2, **dadurch gekennzeichnet, dass** die Faserstrukturelektrode ein poröses Gerüst aus Vliesstoff oder Nadelfilz aufweist, welches mit einer dünnen Metallschicht versehen und mit einer elektrochemisch aktiven Masse gefüllt ist.

4. Alkalische Nickel-Cadmium-Zelle nach einem der vorangehenden Ansprüche, **dadurch gekennzeichnet, dass** die Anzahl der positiven Elektroden kleiner als die Anzahl der negativen Elektroden ist.

5. Alkalische Nickel-Cadmium-Zelle nach einem der Ansprüche 1 bis 3, **dadurch gekennzeichnet, dass** die Anzahl der positiven Elektroden gleich der Anzahl der negativen Elektroden ist.

6. Alkalische Nickel-Cadmium-Zelle nach einem der vorangehenden Ansprüche, **dadurch gekennzeichnet, dass** die außenliegenden negativen Elektroden weniger dicht mit Aktivmasse gefüllt sind als die innenliegenden negativen Elektroden.

## Claims

1. An alkaline nickel-cadmium cell comprising at least one negative electrode (4) and at least one positive electrode (5),
**characterized in that**
the negative electrode (4) is designed as a pocket-type plate electrode and the positive electrode (5) is designed as a fibre structure electrode.

2. An alkaline nickel-cadmium cell according to claim 1, **characterized in that** the pocket-type plate electrode comprises perforated plates made of nickel or nickel-plated carrier material, which plates are arranged such that they form pockets, wherein the pocket-type plate electrode is filled with an electrochemically active mass.

3. An alkaline nickel-cadmium cell according to claim 1 or 2, **characterized in that** the fiber structure electrode comprises a porous structure made of non-woven fabric or needle felt which is provided with a thin metal layer and filled with an electrochemically active mass.

4. An alkaline nickel-cadmium cell according to one of the preceding claims, **characterized in that** the number of the positive electrodes is smaller than the number of the negative electrodes.

5. An alkaline nickel-cadmium cell according to one of the claims 1 through 3, **characterized in that** the number of the positive electrodes is equal to the number of the negative electrodes.

6. An alkaline nickel-cadmium cell according to one of the preceding claims, **characterized in that** the external negative electrodes are less densely filled with the active mass than the internal negative electrodes.

## Revendications

1. Cellule nickel-cadmium alcaline comprenant au moins une électrode négative (4) et au moins une électrode positive (5),
**caractérisée en ce que**
l'électrode négative (4) est conçu comme une électrode à plaques formant des poches et l'électrode positive (5) est conçu comme une électrode à structure fibreuse.

2. Cellule nickel-cadmium alcaline selon la revendication 1, **caractérisée en ce que** l'électrode à plaques formant des poches comprend des plaques perforées en nickel ou en matériau de support nickelé, lesquelles plaques sont disposées de sorte qu'elles forment des poches, l'électrode à plaques formant des poches étant remplie avec une masse électrochimiquement active.

3. Cellule nickel-cadmium alcaline selon la revendication 1 ou la revendication 2, **caractérisée en ce que** l'électrode à structure fibreuse comprend une structure en tissu non tissé ou en feutre aiguilleté, laquelle est munie d'une couche métallique mince et remplie avec une masse électrochimiquement active.

4. Cellule nickel-cadmium alcaline selon l'une des revendications précédentes, **caractérisée en ce que** le nombre d'électrodes positives est plus faible que le nombre d'électrodes négatives.

5. Cellule nickel-cadmium alcaline selon l'une des revendications 1 à 3, **caractérisée en ce que** le nombre d'électrodes positives est égal au nombre d'électrodes négatives.

6. Cellule nickel-cadmium alcaline selon l'une des revendications précédentes, **caractérisée en ce que** les électrodes négatives extérieures sont remplies de manière moins dense avec la masse active que les électrodes négatives intérieures.
